# EUROPÄISCHE PATENTSCHRIFT

(11) **EP 2 310 710 B1**
(45) Veröffentlichungstag und Bekanntmachung des Hinweises auf die Patenterteilung: **25.01.2012**
(21) Anmeldenummer: 09777579.5
(22) Anmeldetag: 31.07.2009
(51) Int. Cl.: F16D 48/06

(54) **KUPPLUNGSAUSRÜCKSYSTEM UND VERFAHREN ZUM BETREIBEN EINES KUPPLUNGSAUSRÜCKSYSTEMS**
CLUTCH RELEASE SYSTEM AND METHOD FOR OPERATING A CLUTCH RELEASE SYSTEM
SYSTÈME DE DÉBRAYAGE ET PROCÉDÉ DE FONCTIONNEMENT D'UN SYSTÈME DE DÉBRAYAGE

(30) Priorität: 01.08.2008 DE 102008036038
(43) Veröffentlichungstag der Anmeldung: 20.04.2011
(73) Patentinhaber: Knorr-Bremse Systeme für Nutzfahrzeuge GmbH, 80809 München (DE)
(72) Erfinder: HILBERER, Eduard, 68766 Hockenheim (DE)
(74) Vertreter: Schönmann, Kurt
(86) Internationale Anmeldenummer: PCT/EP2009/005562
(87) Internationale Veröffentlichungsnummer: WO 2010/012485

(56) Entgegenhaltungen:
- EP-A- 1 679 450
- DE-A1-102006 014 141
- DE-A1-102006 054 021
- FR-A- 2 918 334
- FR-A- 2 922 616

## Beschreibung

Die Erfindung betrifft ein Verfahren zum Betreiben eines Kupplungsausrücksystems eines Fahrzeugs mit einem elektrisch betätigbaren Kupplungsausrücker, der einen Sensor zur Erfassung einer Stellung eines Ausrückkolbens des Kupplungsausrückers und ein Steuergerät, das einen Ausrückkolben in Abhängigkeit von einer erfassten Stellung einer Kupplungsbetätigungseinrichtung steuert, umfasst, und einem weiteren Sensor zur Erfassung der Stellung der Kupplungsbetätigungseinrichtung.

Die Erfindung betrifft weiterhin ein Kupplungsausrücksystem mit einem elektrisch betätigbaren Kupplungsausrücker, der einen Sensor zur Erfassung einer Stellung eines Ausrückkolbens des Kupplungsausrückers und ein Steuergerät, das einen Ausrückkolben in Abhängigkeit von einer erfassten Stellung einer Kupplungsbetätigungseinrichtung steuert, umfasst, und einem weiteren Sensor zur Erfassung einer Stellung einer Kupplungsbetätigungseinrichtung.

In einem Antriebsstrang eines Fahrzeugs ist üblicherweise eine Kupplung vorgesehen, die geeignet ist, den Antriebsstrang des Fahrzeugs zu unterbrechen. Die Unterbrechung des Antriebsstranges wird zum Beispiel bei einem Gangwechsel eines in dem Antriebsstrang angeordneten Getriebes benötigt.

Die Kupplung umfasst normalerweise einen Kupplungssteller, welcher normalerweise wiederum einen Leistungsteil und einen Steuerteil umfasst. Der Leistungsteil übernimmt die Aufgabe, die Ausrückkraft unter Verwendung eines unter Druck stehenden Mediums, zum Beispiel von Druckluft aus einem Behälter, bereitzustellen. Das Leistungsteil umfasst einen Ausrückkolben und eine Ventilsteuerung, die zum Beispiel als Magnetventilsteuerung ausgeführt sein kann.

Beim Betätigen der Kupplung wird eine Kupplungsscheibe zwischen einer Druckplatte und einem Schwungrad abgehoben, womit eine Drehmomentübertragung von dem Schwungrad auf eine mit der Druckplatte drehfest verbundene Mitnehmerscheibe unterbrochen wird. Das bei dem Abheben angesteuerte Ausrücklager wird dabei bei einer drückenden Bauweise der Kupplung drückend und bei einer ziehenden Bauweise der Kupplung ziehend zum Auskuppeln bewegt, um die Anpresskräfte, die meistens durch Tellerfedern erzeugt werden, aufzuheben und die Kupplung zu öffnen. Bein einer exzentrischen Anordnung des Kupplungsausrückers ist eine Kraftübertragung vom Kupplungsausrücker beziehungsweise Kupplungssteller auf das Ausrücklager über einen Hebel realisierbar.

Der Steuerteil des Kupplungsausrückers umfasst einen Kupplungsgeber, welcher einen Pedalweg misst, wobei der gemessene Weg proportional als hydraulische oder elektrische Größe dem verstärkenden Leistungsteil, zum Beispiel einem Zylinder, als Sollgröße vorgegeben wird. Diese Sollgröße kann dann, insbesondere im Falle einer elektrischen Signalübertragung, noch korrigiert werden. Eine Leckagenkompensation ist bei einem hydraulischen Steuerkreis der Kupplung durch ein ventilgesteuertes Nachfließen von Öl aus einem Behälter möglich. Elektrisch gesteuerte Kupplungssteller oder Kupplungsausrücker werden vorwiegend von einer Getriebeelektronik eines automatischen Getriebes aus angesteuert, wobei elektrische Kupplungssteller den Vorteil haben, dass der Steuerkreis nicht entlüftet werden muss und nicht leckageempfindlich ist. Des Weiteren gibt es motorische Steller, welche jedoch für Nutzfahrzeugapplikationen nicht ausreichend robust und auch nicht leistungsstark beziehungsweise schnell genug schaltend sind.

Standardmäßig verfügt eine verwendete Kupplung über zumindest ein Verschleißteil, zum Beispiel eine Kupplungsscheibe oder einen Kupplungsbelag, welches durch Abrieb beim Schalten der Kupplung verschlissen wird. Dabei nimmt die Materialstärke des Verschleißteiles kontinuierlich ab, weshalb sich der Schaltpunkt der Kupplung, das heißt der Punkt, bei dem das Verschleißteil eine erste Kraftübertragung über die Kupplung ermöglicht, verschiebt.

Für die Ausrückung der Kupplung gibt es hydraulische Steuerkreise, die jedoch keine Möglichkeit für eine Verschleißanpassung aufweisen und auch kein softwarebasiertes Erlernen einer Kennlinie für die Kupplungsausrückung ermöglichen.

Zur Lösung dieses Problems ist es bekannt, die Kupplung mit Hilfe eines elastischen Elementes, zum Beispiel eine Feder, die die Kupplungsscheibe vorspannt, selbstnachstellend auszuführen. Die Verschleißanpassung erfolgt dann automatisch über die vorgespannte Mechanik.

Weiterhin existieren vollelektronische Getriebeschaltungen, die auch über integrierte Steuerkreise zur Kupplungsausrückung verfügen können und eine sehr komplexe Bauweise aufweisen. Der für einen elektrischen Steuerkreis verfügbare Einbauraum in der Nähe des Triebstranges ist einer hohen Temperatur von etwa 110°C ausgesetzt, weshalb erhöhte Anforderungen an die gesamte verbaute Elektronik in diesen Bereich gestellt werden müssen. Ein Kupplungsausrücker für eine solche Getriebeschaltung, der über eine selbstnachstellende Verschleißanpassung verfügt, ist beispielsweise aus der DE 10 2006 037 958 A1 bekannt.

Im Stand an Technik sind auch die Offenbarungen DE 102006054021, EP1679450 und DE10200614141 relevant.

Der Erfindung liegt die Aufgabe zugrunde, ein Verfahren zum Betreiben eines Kupplungsausrücksystems bereitzustellen, mit dessen Hilfe der Aufbau des betriebenen Kupplungssystems bei gleicher Funktionalität vereinfacht werden kann.

Diese Aufgabe wird mit de Merkmalen der unabhängigen Ansprüche gelöst.

Vorteilhafte Ausführungsformen ergeben sich aus den abhängigen Ansprüchen.

Das gattungsgemäße Verfahren wird dadurch weiterentwickelt, dass eine Kennlinienfunktion F, die einen Zusammenhang zwischen der Stellung der Kupplungsbetätigungseinrichtung und der Stellung des Ausrückkolbens beschreibt, beim Betätigen des Kupplungsausrücksystems berücksichtigt wird, um trotz eines fortschreitenden Verschleißes des Kupplungsausrücksystems bei einer definierten Stellung der Kupplungsbetätigungseinrichtung eine gleich bleibende Kupplungsausrückung zu erreichen. Durch die Anpassung des Kupplungsausrücksystems an den fortschreitenden Verschleiß werden die nach außen sichtbaren Eigenschaften des Kupplungsausrücksystems während der Lebensdauer der verwendeten Verschleißteile konstant gehalten und der Bedienkomfort erhöht. Gleichzeitig sorgt die Verschleißanpassung für eine materialschonende Betriebsweise des Kupplungsausrücksystems, da ein länger andauerndes Schleifen des Verschleißteils vermieden werden kann. Für die Anpassung selbst ist keine zusätzliche Mechanik notwendig, da die Anpassung mit Hilfe der Kennlinienfunktion F erfolgt.

Besonders bevorzugt ist, dass die Kennlinienfunktion F in einem in dem Kupplungsausrücksystem angeordneten Schreib-Lesespeicher gespeichert wird.

Vorzugsweise ist vorgesehen, dass beim Betätigen des Kupplungsausrücksystems eine aktualisierte Kennlinienfunktion F_{act} von dem Steuergerät ermittelt wird, die einen aktuellen Zusammenhang zwischen der Stellung der Kupplungsbetätigungseinrichtung und der Stellung des Ausrückkolbens beschreibt, und dass die gespeicherte Kennlinienfunktion F nach dem Betätigen des Kupplungsausrücksystems durch die aktualisierte Kennlinienfunktion F_{act} ersetzt wird, um beim nächsten Betätigen des Kupplungsausrücksystems über eine aktuelle Kennlinienfunktion F zu verfügen. Auf diese Weise wird eine kontinuierliche Verschleißanpassung des Kupplungsausrücksystems bei jedem Schaltvorgang erreicht.

Insbesondere kann vorgesehen sein, dass über einen Anschluss an einen CAN-Bus der Kupplungsschlupf beim Betätigen des Kupplungsausrücksystems zur Bestimmung der aktualisierten Kennlinienfunktion F_{act} berücksichtigt wird.

Nützlicherweise kann vorgesehen sein, dass ein Warnsignal ausgegeben wird, wenn ein in einem elektrischen Schreib-Lesespeicher abgelegter zulässiger Verschleißwert von einem ermittelten Verschleißwert überschritten wird. Dabei zeigt beispielsweise die gespeicherte Kennlinienfunktion F eine Überschreitung eines erlaubten Verschleißes eines Verschleißteils durch einen großen Leerhub L₁' an. Der Leerhub des Kupplungsausrücksystems wächst mit steigendem Verschleiß des Verschleißteils, da dessen Materialstärke sinkt. Ist das Material des Verschleißteils weitgehend abgetragen, ist dies durch eine Messung des Leerhubes des Kupplungsausrücksystems detektierbar, zum Beispiel durch einen Vergleich mit dem ursprünglichen Leerhub des Kupplungsausrücksystems L₁ mit einem unbenutzten Verschleißteil. Die Ausgabe eines Warnsignals bei der Überschreitung eines erlaubten Verschleißes eines Verschleißteils, zum Beispiel einer Kupplungsscheibe, dient der Wahrung der Betriebsbereitschaft des Fahrzeugs, da ein überraschender Ausfall des Kupplungsausrücksystems durch eine vollständig verschlissene Kupplungsscheibe vermieden werden kann.

Weiterhin kann vorgesehen sein, dass das Fahrzeug außer Betrieb gesetzt wird, wenn die gespeicherte Kennlinienfunktion F eine Überschreitung eines zulässigen Verschleißes eines Verschleißteils durch einen großen Leerhub L₁' anzeigt. Die Außerbetriebsetzung des Fahrzeugs dient dem Schutz empfindlicher Fahrzeugkomponenten, die bei einem vollständigen Verschleiß eines Verschleißteils, zum Beispiel einer Kupplungsscheibe, Schaden nehmen könnten. Der zulässige Verschleiß, das heißt die Dicke der durch Reibung abgetragenen Materialstärke, wird dabei durch eine aus Sicherheitsgründen notwendige Mindeststabilität der Kupplungsscheibe bestimmt, bei deren Unterschreitung ein Bruch nicht mehr auszuschließen ist.

Es kann auch vorgesehen sein, dass die gespeicherte Kennlinienfunktion F vor dem ersten Betätigen des Kupplungsausrücksystems werkseitig in dem Schreib-Lesespeicher gespeichert wird.

Alternativ kann vorgesehen sein, dass die gespeicherte Kennlinienfunktion F bei dem ersten Betätigen des Kupplungsausrücksystems bestimmt wird und in dem Schreib-Lesespeicher gespeichert wird. Die Bestimmung der Kennlinienfunktion F bei dem ersten Betätigen des Kupplungsausrücksystems erlaubt eine einfache Fertigung des Kupplungsausrückers mit verhältnismäßig großen Toleranzen sowie die automatische Anpassung des Kupplungsausrückers an verschiedene Kupplungsbetätigungseinrichtungen, da eventuelle Abweichungen von einem erwünschten Verhalten über die Kennlinienfunktion F ausgeglichen werden können.

Das gattungsgemäße Kupplungsausrücksystem wird dadurch weiterentwickelt, dass das Steuergerät geeignet ist, eine Kennlinienfunktion F, die einen Zusammenhang zwischen der Stellung der Kupplungsbetätigungseinrichtung und der Stellung des Ausrückkolbens beschreibt, beim Betätigen des Kupplungsausrücksystems zu berücksichtigen, um trotz eines fortschreitenden Verschleißes des Kupplungsausrücksystems bei einer definierten Stellung der Kupplungsbetätigungseinrichtung eine gleich bleibende Kupplungsausrückung zu erreichen.

Auf diese Weise werden die Vorteile und Besonderheiten des erfindungsgemäßen Verfahrens auch im Rahmen eines Kupplungsausrücksystems umgesetzt.

Dies gilt auch für die nachfolgend angegebenen besonders bevorzugten Ausführungsformen des erfindungsgemäßen Kupplungsausrücksystems.

Dieses ist in nützlicher Weise dadurch weitergebildet, dass das Steuergerät geeignet ist, beim Betätigen des Kupplungsausrücksystems eine aktualisierte Kennlinienfunktion F_{act} zu ermitteln, die einen aktuellen Zusammenhang zwischen der Stellung der Kupplungsbetätigungseinrichtung und der Stellung des Ausrückkolbens beschreibt, und dass das Steuergerät geeignet ist, die gespeicherte Kennlinienfunktion F nach dem Betätigen des Kupplungsausrücksystems durch die aktualisierte Kennlinienfunktion F_{act} zu ersetzen, um beim nächsten Betätigen des Kupplungsausrücksystems über eine aktuelle Kennlinienfunktion F zu verfügen.

Weiterhin kann vorgesehen sein, dass das Kupplungsausrücksystem einen Anschluss an einen CAN-Bus umfasst. Über den Anschluss an den CAN-Bus kann ein Abgleich mit externen Fahrzeugparametern, zum Beispiel einer Motordrehzahl und einer Getriebedrehzahl, erfolgen wobei aus den beiden genannten Fahrzeugparametern zusammen mit der aktuellen Getriebeübersetzung der momentane Kupplungsschlupf ermittelbar ist.

Es kann vorgesehen sein, dass das Steuergerät geeignet ist, ein Warnsignal auszugeben, wenn die gespeicherte Kennlinienfunktion F eine Überschreitung eines erlaubten Verschleißes eines Verschleißteils durch einen großen Leerhub L₁' anzeigt.

Weiterhin kann vorgesehen sein, dass das Steuergerät geeignet ist, das Fahrzeug außer Betrieb zu setzen, wenn die gespeicherte Kennlinienfunktion F eine Überschreitung eines zulässigen Verschleißes eines Verschleißteils durch einen großen Leerhub L₁' anzeigt.

Vorzugsweise kann vorgesehen sein, dass das Steuergerät geeignet ist, die Kennlinienfunktion F bei dem ersten Betätigen des Kupplungsausrücksystems zu bestimmen und in dem Schreib-Lesespeicher zu speichern.

Ein elektrisch betätigbarer Kupplungsausrücker kann dadurch weiterentwickelt werden, dass ein Steuergerät zur Ansteuerung der Ventileinrichtung in dem Gehäuse des Kupplungsausrückers angeordnet ist. Die Anordnung des Steuergeräts in dem Gehäuse des Kupplungsausrückers ermöglicht eine modulare Ausgestaltung des Kupplungsausrückers, wobei lediglich ein Medienversorgungsanschluss und eine Medienabführung zur Versorgung des den Kupplungsausrücker bewegenden Ausrückkolbens und ein Anschluss zur Erfassung eines Kupplungsbetätigungswunsches vorzusehen sind. Dies hat den Vorteil, dass auch kleinere leichtere Fahrzeuge, welche vorrangig mechanische Getriebe und Kupplungen verbauen, die Vorteile eines elektrischen Kupplungsausrückers nutzen können, wobei keine weiteren Veränderungen an dem Fahrzeug notwendig werden. Weiterhin kann das Kupplungssystem durch das integrierte Steuergerät lernfähig ausgestaltet werden.

Vorzugsweise ist vorgesehen, dass die Ventileinrichtung mit einem Anschluss gekoppelt ist, um mit Druckluft versorgt zu werden. Die Versorgung des Kupplungssystems mit Druckluft als Schaltmedium vermeidet eine Gefährdung des Reibbelages der Kupplung durch eine Hydraulikflüssigkeit.

Nützlicherweise kann vorgesehen sein, dass in dem Gehäuse ein Sensor zur Erfassung einer Stellung des Ausrückkolbens des Kupplungsausrückers bezüglich des feststehenden Gehäuses angeordnet ist. Durch die Erfassung der Stellung des Ausrückkolbens gegenüber dem feststehenden Gehäuse ist ein fehlerhaftes Schalten des Kupplungsausrückers von dem Kupplungsausrücker selbst detektierbar.

Es kann vorgesehen sein, dass die Ventileinrichtung ein 3/2-Wegeventil umfasst. Durch die Verwendung eines 3/2-Wegeventils, das beispielsweise als Magnetventil ausgeführt sein kann, lassen sich die zum Schalten des Kupplungsausrückers notwendigen Schaltstellungen der Ventileinrichtung mit Hilfe eines einzigen Ventils realisieren. Dabei sind ein erster Anschluss mit einer Medienversorgung, ein zweiter Anschluss mit einer Medienabführung und ein dritter Anschluss mit einem Steuerraum des Ausrückkolbens gekoppelt.

Dabei ist vorzugsweise vorgesehen, dass die Ventileinrichtung in der Verbindungsleitung zwischen dem 3/2-Wegeventil und dem Steuerraum ein 2/2-Wegeventil als Druckhalteventil umfasst. Durch das Druckhalteventil kann die Lebensdauer des pulsweitenmoduliert angesteuerten 3/2-Wegeventils erhöht werden, da keine weiteren Schaltvorgänge während des Druckhaltens notwendig sind.

Alternativ kann vorgesehen sein, dass die Ventileinrichtung zwei 2/2-Wegeventile umfasst. Die Verwendung zweier 2/2-Wegeventile, die beispielsweise als Magnetventile ausgebildet sein können, erlaubt ebenfalls die Realisierung aller für den Kupplungsausrücker notwendigen Schaltzustände der Ventileinrichtung, wobei die 2/2-Wegeventile gegenüber einem einzelnen 3/2-Wegeventil robuster sein können.

Es kann vorgesehen sein, dass das Steuergerät einen Anschluss an einen seriellen Fahrzeugbus aufweist, um zumindest ein Signal für den Kupplungsverschleiß auszugeben. Über das Signal für den Kupplungsverschleiß wird ein Wechsel der Kupplungsbeläge vor einem Ausfall des Kupplungssystems ermöglicht.

Weiterhin ist es möglich, dass die Ventileinrichtung eine gemeinsame Medienabführung umfasst. Eine gemeinsame Medienabführung spart Bauraum in dem Gehäuse. Die gemeinsame Medienabführung kann insbesondere als einfache Entlüftungsbohrung ausgeführt sein, wenn als Medium Druckluft verwendet wird.

Vorteilhafterweise kann vorgesehen sein, dass in dem Gehäuse des Kupplungsausrückers ein Schreib-Lesespeicher angeordnet ist, der zur Speicherung einer Kennlinienfunktion F und einer aktualisierten Kennlinienfunktion F_{act} vorgesehen ist. Die Speicherung kann dabei auch in Form von Parametersätzen erfolgen, aus denen eine Kennlinienfunktion bestimmbar ist oder die geeignet sind, die Funktion der Kennlinienfunktion zu ersetzen. Durch die Anordnung eines Schreib-Lesespeichers in dem Gehäuse des Kupplungsausrückers ergibt sich eine Möglichkeit zur selbständigen Verschleißanpassung des Kupplungsausrückers bei fortschreitendem Verschleiß der Kupplung.

Vorzugsweise ist vorgesehen, dass an dem Gehäuse ein Stecker für elektrische Anschlüsse angeordnet ist. Ein Stecker bietet eine einfache Möglichkeit eines genormten Anschlusses, wodurch die Integration verschiedener Kupplungsausrücker in ein Fahrzeug beziehungsweise eines Kupplungsausrückers in verschiedene Fahrzeuge erleichtert wird.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung eines Fahrzeugs;
- Figur 2: eine schematische Darstellung eines Kupplungsausrücksystems;
- Figur 3: eine Kennlinienfunktion F und eine aktualisierte Kennlinienfunktion F_{act};
- Figur 4: einen Graphen zur Veranschaulichung einer pulsweitenmodulierten Ansteuerung einer Ventileinrichtung des Kupplungsausrücksystems und
- Figur 5: eine schematische Darstellung einer Kupplungsbetätigungseinrichtung mit verschiedenen Betätigungszuständen.

In den folgenden Zeichnungen bezeichnen gleiche Bezugszeichen gleiche oder gleichartige Teile.

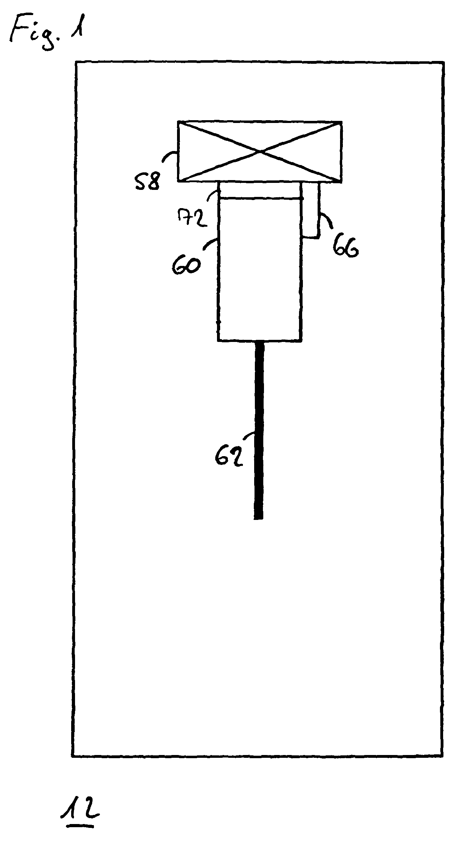

Figur 1 zeigt eine schematische Darstellung eines Fahrzeugs. Ein dargestelltes Fahrzeug 12 umfasst einen Antriebsmotor 58 an dem ein Getriebe 60, eine Kupplung 72 und ein Gehäuse 66 mit einem Kupplungsausrücker angeordnet sind. Von diesen Bauteilen geht eine Antriebswelle 62 aus, über die Antriebsenergie zum Antrieb des Fahrzeugs 12 von dem Antriebsmotor 58 an nicht dargestellte Antriebsräder übertragen wird. An dem Antriebsmotor 58 ist weiterhin ein nicht dargestellter Drehzahlsensor zur Ermittlung der Kurbelwellendrehzahl angeordnet und an dem Getriebe 60 ist ein weiterer nicht dargestellter Drehzahlsensor zur Ermittlung der Getriebedrehzahl angeordnet. Darüberhinaus sind an dem Fahrzeug 12 Drehzahlsensoren an zumindest zwei Rädern zur Ermittlung einer Fahrzeuggeschwindigkeit angeordnet. Der weitere Drehzahlsensor am Getriebe 60 kann beispielsweise zur Steuerung des Tachographen verwendet werden.

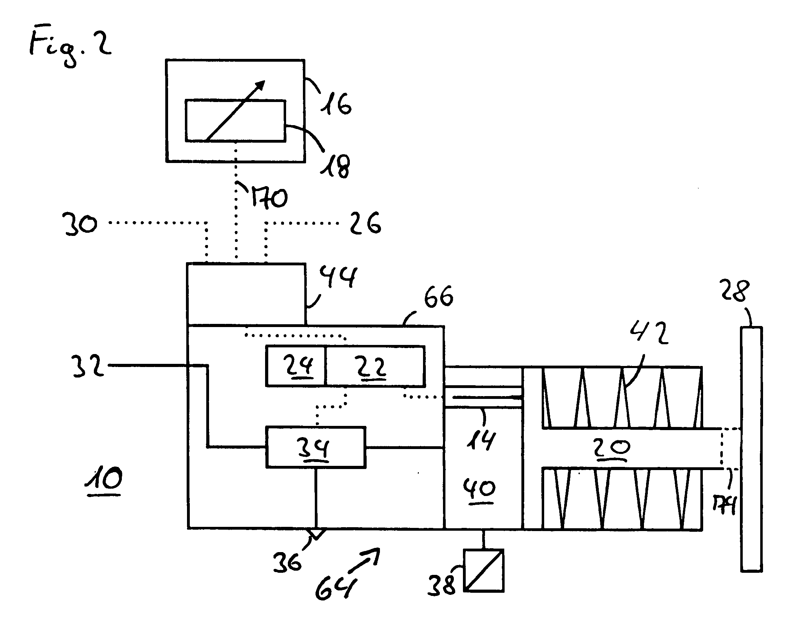

Figur 2 zeigt eine schematische Darstellung eines Kupplungsausrücksystems. Ein dargestelltes Kupplungsausrücksystem 10 umfasst eine Kupplungsbetätigungseinrichtung 16 mit einem integrierten weiteren Sensor 18, welcher über eine elektrische Leitung 70 mit einem Kupplungsausrücker 64 gekoppelt ist. Der Kupplungsausrücker 64 weist weiterhin an einem optionalen Stecker 44, über den auch die elektrische Leitung 70 geführt ist, einen Anschluss für eine Spannungsversorgung 30 und einen Anschluss 26 an eine serielle Kommunikationsleitung auf, zum Beispiel einen CAN-Bus, die an ein Steuergerät 22 weitergeführt werden. Über den Anschluss 26 wird zumindest ein den Kupplungsverschleiß angebendes Signal ausgegeben und über die elektrische Leitung 70 ist zusammen mit dem weiteren Sensor 18 der Betätigungsweg der Kupplungsbetätigungseinrichtung 16, zum Beispiel ein Kupplungspedal, bestimmbar. Die Kommunikation zwischen der Kupplungsbetätigungseinrichtung 16 und dem Steuergerät 22 kann über ein serielles Datenprotokoll auf der elektrischen Leitung 70 erfolgen. Ist kein Stecker 44 vorgesehen, so werden die verschiedenen Anschlüsse 26, 30, 70 separat in ein Gehäuse 66 des Kupplungsausrückers 64 geführt. Das Steuergerät 22 verfügt daher über eine direkte elektrische Verbindung 70 mit der Kupplungsbetätigungseinrichtung 16. Weiterhin sind an dem Gehäuse 66 des Kupplungsausrückers 64 ein Medienversorgungsanschluss 32 und eine Medienabführung 36 vorgesehen, über die eine in dem Gehäuse 66 angeordnete Ventileinrichtung 34 zum Schalten des Kupplungsausrückers 64 verwendetes Medium einem Steuerraum 40 eines Ausrückkolbens 20 zu- oder abführt. Der Ausrückkolben 20 ist über Mittel zur Kraftübertragung 74, zum Beispiel ein Ausrücklager, eine Membranfeder und/oder eine Druckplatte, mit einem Verschleißteil 28 verbunden. Die Medienabführung 36 kann, insbesondere bei der Verwendung von Druckluft als Medium, als einfache Entlüftung ausgebildet sein, über die Druck in die Umgebung abgelassen wird. Dabei sind die in der Ventileinrichtung 34 angeordneten Magnetventile zum Ansteuern des Ausrückkolbens 20 mit einer gemeinsamen Entlüftungsbohrung zur atmosphärischen Entlüftung verbunden. Die Ventileinrichtung 34 wird über ein ebenfalls in dem Gehäuse 66 angeordnetes Steuergerät 22 mit angeschlossenem Schreib-Lesespeicher 24 angesteuert und kann wahlweise durch ein 3/2-Wegeventil oder zwei 2/2-Wegeventile gebildet werden, die als Magnetventile ausgelegt sein können. Zusätzlich kann noch ein weiteres 2/2-Wegeventil in der Ventileinrichtung angeordnet sein, dass als ein Druckhalteventil wirkt. Ist die Ventileinrichtung 34 als 3/2-Wegeventil ausgebildet, so ist ein erster Anschluss des 3/2-Vegeventils mit der Medienversorgung 32 gekoppelt, ein zweiter Anschluss mit der Medienabführung 36 gekoppelt und ein dritter Anschluss mit dem Steuerraum 40 gekoppelt. Zwischen dem dritten Anschluss des 3/2-Wegeventils und dem Steuerraum kann das Druckhalteventil angeordnet werden. Die in der Ventileinrichtung 34 angeordneten einzelnen Ventile können über das Steuergerät 22 entweder pulsweitenmoduliert oder in einem Proportionalbetrieb angesteuert werden. Weitere Ventilanordnungen in der Ventileinrichtung 34 sind denkbar. Das Steuergerät 22 ist also weiterhin mit dem integrierten Schreib-Lesespeicher 24, einem Sensor 14 und der Ventileinrichtung 34 zur Steuerung des Ausrückkolbens 20 über elektrische Leitungen gekoppelt.

Der Kupplungsausrücker 64 zeichnet sich durch ein in dem Gehäuse 66 des Kupplungausrückers 64 implementiertes Steuergerät 22 aus, welches die Ventileinrichtung 34 zum Be- und Entlüften der als Steuerraum 40 wirkenden Kolbenkammer im Leistungsteil ansteuert. Das Steuergerät 22 ist weiterhin geeignet, den Schlupf des Kupplungssystems 10 anhand einer Antriebsmotordrehzahl und einer Getriebeeingangsdrehzahl zu berechnen. Dabei kann das Steuergerät 22 insbesondere verschiedene Vergleiche zwischen Antriebsmotordrehzahl und Getriebeausgangsdrehzahl berechnen. Wird ein Schlupf des Kupplungssystems 10 detektiert, das heißt ein Schlupf im Triebstrang des Fahrzeugs, so kann das Steuergerät 22 über einen Anschluss 26 ein entsprechendes Signal ausgeben. Der zurückgelegte Weg des Ausrückkolbens 20 wird durch einen als Wegsensor ausgebildeten Sensor 14 gemessen, der meist induktiver Bauart ist. Ein optionaler Drucksensor 38 misst den Druck in dem Steuerraum 40. Das Steuergerät 22 hat weiterhin einen CAN Anschluß 26, über den das Steuergerät 22 eine Getriebewelleneingangs- oder Getriebewellenausgangsdrehzahl und Motordaten, zum Beispiel ein Motordrehmoment und eine Motordrehzahl, in Form eines Signals erhält. Der Informationsrahmen für die Signale des Dieselantriebsmotors ist dabei durch die genormten Botschaften nach SAE J1939 EEC1 und EEC2 beschrieben.

Der Kupplungsausrücker 64 sendet seine eigenen Botschaften beziehungsweise Fehlerbotschaften, welche das Steuergerät 22 aus den bezogenen CAN-Daten und aus den gemessenen Daten des Kupplungsausrücksystems errechnet, gemäß einem standardisierten Protokoll zum Beispiel nach der SAE J1939/71 über eine serielle elektrische Datenleitung, die Beispielsweise mit dem Anschluss 26 an den CAN-Bus identisch sein kann. Also erzeugt und schreibt der Kupplungsausrücker 64 auch sein eigenes Echtzeitprotokoll, welches aufgetretenden Fehlern jeweils zumindest noch einen Zeitstempel, einen Stempel der gefahrenen Kilometer vom einem anderen Steuergerät, zum Beispiel dem Tachographen, sowie die Fehlerhäufigkeit beinhaltet. Der dabei verwendete integrierte Schreib-Lesespeicher 24 ist vorzugsweise als EE-Prom oder Flash-Speicher ausgebildet und speichert neben den Kennlinienparametern und Triggerwerten die Fehlerdaten. Des Weiteren werden in dem Schreib-Lesespeicher 24 weitere Kupplungs- beziehungsweise Fahrzeugdaten gespeichert, zum Beispiel der Kupplungsdurchmesser, die Ausrückhebelübersetzung sowie Motor- und Getriebedaten.

Als Reaktion auf einen gemessenen Drehschlupf zwischen der Kurbelwellendrehzahl und einem der Mitnehmerscheibe nachgeordneten Drehzahlsensor, also einer Drehzahldifferenz zwischen Kupplungseingang und Kupplungsausgang bei geschlossener Kupplung, sendet der Kupplungsausrücker 64 optional eine Nachfragebotschaft an den Antriebsmotor, der insbesondere ein Dieselmotor sein kann, welcher dann das erzeugte Drehmoment zur Entlastung der Kupplung reduziert. Auf diese Weise kann auch mit einer schleifenden Kupplung und dem daraus resultierenden reduziertem Kuppelmoment noch die nächste Werkstatt angefahren werden. Es ist auch vorstellbar, dass zur Reduzierung des zu übertragenden Momentes der Kupplung bestimmte Gänge oder Ganggruppen gesperrt werden oder dem Fahrer optisch in einem Display angezeigt wird, welche Gänge in dieser Situation zu einer Kupplungsüberlastung führen.

Eine weitere Möglichkeit einer zusätzlichen Schlupfüberwachung im Triebstrang ist der absolute Vergleich von Motordrehzahl und Raddrehzahl bzw. daraus errechneter mittlerer Fahrzeuggeschwindigkeit. Das Kupplungsausrücksystem 10 kann die Rollkurvenzuordnung erlernen und anhand dieser Größe auch die Gangzahl des Getriebes und deren Übersetzungen errechnen.

Weiterhin kann ein elektrisches Fahrzeugsteuerungssystem und Fahrzeugüberwachungssystem lernen, den Abrieb an den Rädern qualitativ zum Berechnen des absoluten Schlupfverhaltens heranzuziehen. Für eine quantitative Aussage sind allerdings eine Motordrehzahl und eine Getriebedrehzahl erforderlich.

Optional kann der Kupplungsbetätigungsbefehl auch über den Anschluss 26, die serielle Datenleitung, von einem anderen Steuergerät, also nicht dem Kupplungspedal kommen. Dies ist dann vorteilhaft, wenn zum Beispiel ein teilelektronisches Getriebe verbaut wird. Außerdem kann die Kupplung bei defektem Kupplungspedal im Servicebetrieb über ein Diagnosesignal geöffnet und geschlossen werden.

Im Folgenden wird das Funktionsprinzip des Kupplungsausrücksystems 10 beschrieben, wobei auf die Verschleißanpassung und die Kennlinienfunktion eingegangen wird. Der Ausrückkolben 20 bewegt eine über ein Ausrücklager bewegte Druckplatte, welche ein als eine Kupplungsscheibe ausgeführtes Verschleißteil 28, bestehend aus einem Belag und einer Mitnehmerscheibe, ist und angedrückt oder weggedrückt wird. Dadurch ist es möglich, beim Anheben der Druckplatte vom Kupplungsbelag die Kupplung zu trennen. Der Ausrückkolben wird von einer Feder 42 bei einer Entlastung des Steuerraums 40 rückgestellt, das heißt beim Entlüften wird der Ausrückkolben 20 zurückgefahren, und die Kupplung wird durch das Federpaket, welches meistens als eine Membran oder eine speziell geformte Tellerfeder ausgebildet ist, wieder geschlossen. Dabei können Kupplungen unterschieden werden, die zum Öffnen gedrückt oder gezogen werden. Im Falle einer zum Öffnen gezogenen Kupplung, was meistens der Fall ist, bedeutet ein tief in eine Spule des Sensors 14 eingetauchter Spulenkem ein Maß für einen hohen Verschleiß des Kupplungsbelags. Im Falle einer zum Öffnen gedrückten Kupplung ist ein hoher Verschleiß mit einem weit aus der Spule ausgefahrenen Spulenkem verbunden.

Der in dem Steuerraum 40 herrschende Druck kann über einen Drucksensor 38 bestimmt werden, der wahlweise innerhalb oder außerhalb des Gehäuses 66 des Kupplungsausrückers 64 angeordnet sein kann. Die Position des Ausrückkolbens 20 ist über den Sensor 14 detektierbar, der mit dem Steuergerät 22 gekoppelt ist. Der Sensor 14 ist dabei vorzugsweise als ein induktiver Sensor ausgebildet, dessen Messprinzip auf der Basis einer induktiven Tauchspulenmessung beruht, und mit einem wechselnden Signal angesteuert wird. Das Steuergerät 22 umfasst deshalb auch eine Interfaceschaltung für den Sensor 14, welche zumindest einen quarz- oder oszillatorgetriggertes Wechselsignal für den Wegsensor 14 erzeugt. Für den gemessenen Wegsensorausgangswert ist nämlich eine genaue konstante Trägerfrequenzzuordnung erforderlich, die nur unter Verwendung eines Oszillators oder eines Quarzes, welcher in einem Schwingkreis angeordnet ist, erzeugt werden kann. Der in die Spule eintauchende Spulenkern ist dabei an dem Ausrückkolben 20 befestigt. Die Medienabführung 36 ist in Figur 2 als einfache Entlüftung zur Abführung von Druckluft dargestellt. Es ist jedoch auch möglich anstatt der dargestellten Entlüftung eine Rückführungsleitung zu verwenden, falls das zum Schalten des Kupplungsausrückers 64 verwendete Steuermedium ein flüssiges Hydraulikmedium ist, welches in einem geschlossenen Kreislauf zirkulieren soll. Das in dem Gehäuse 66 angeordnete Steuergerät 22 bewegt den Auslenkkolben 20 durch Schalten der Ventileinrichtung 34 gemäß der Vorgabe der Kupplungsbetätigungseinrichtung 16, wobei eine in dem Schreib-Lesespeicher 24 gespeicherte Kennlinienfunktion F herangezogen wird, um die durch die Kupplungsbetätigungseinrichtung 16 gewünschte Position des Ausrückkolbens zu bestimmen. Die Kennlinienfunktion F ist dabei zumindest in Form der notwendigen Parameter, zum Beispiel einer Steigung, einem Kupplungspunkt und einem Anfangspunkt, in dem Schreib-Lesespeicher 24 hinterlegt. Es ist denkbar, den Anfangspunkt der Kennlinienkurve für ein unverschlissenes Verschleißteil zusätzlich zu speichern, um einen späteren Verschleiß leichter detektierbar zu machen. Der Verschleiß wird unter Zuhilfenahme des Sensors 14 gemessen, der den absoluten Weg zwischen dem Gehäuse 66 und dem Ausrückkolben 20 im eingekuppelten Zustand misst, und kann durch das Steuergerät 22 in Form eines elektrischen Signals über eine elektrische Leitung, zum Beispiel den Anschluss 26, ausgegeben werden. Das Schlupfverhalten im Bereich eines sehr starken Verschleißes wird gleichzeitig über eine Drehzahlveränderung im Zusammenhang mit einer Drehmomentänderung bewertet. Diese Größen sind auch ein Indikator für einen ungewollten Schlupf, der auf sonstige Fehler im Kupplungssystem zurückführbar ist. Die sonstigen Fehler umfassen ein Ermüden der Kupplungsanpressfeder, ein Klemmen des Ausrücklagers, eine ungünstige Veränderung des Reibbelags durch Umwelteinflüsse, zum Beispiel eine Verglasung des Belags oder ein Verölen des Belags durch Motor-/Getriebeöl infolge undichter Dichtringe.

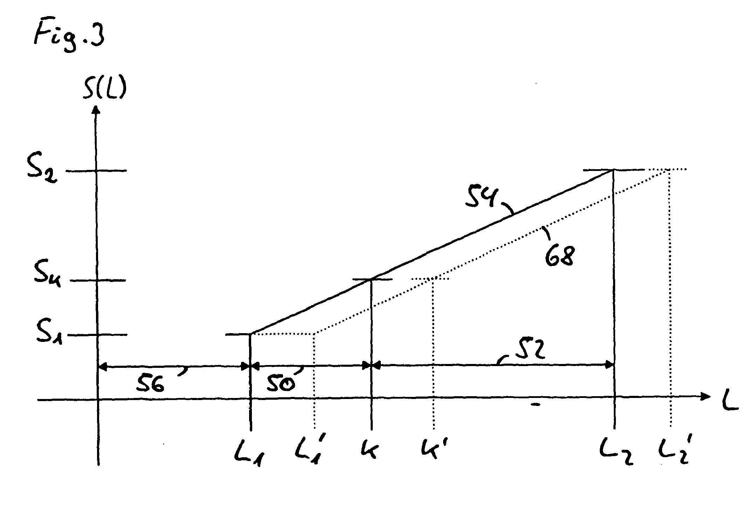

Die Funktionsweise der Verschleißanpassung des Kupplungsausrückers 64 wird im Folgenden im Zusammenhang mit Figur 3 erläutert.

Figur 3 zeigt eine Kennlinienfunktion F und eine aktualisierte verschobene Kennlinienfunktion F_{act}. Aufgetragen ist auf der X-Achse mit L die Wegstrecke, um die der Ausrückkolben des Kupplungsausrückers aus seiner Ruhelage ausgelenkt ist, und in Y-Richtung mit S(L) die von dem weiteren Sensor detektierte Position der Kupplungsbetätigungseinrichtung ausgehend von ihrer Ruhestellung. Eine als durchgezogene Linie eingezeichnete Kennlinienfunktion F 54 wächst von dem Punkt (L₁, S₁) linear bis zu dem Punkt (L₂, S₂) an. Während des Anstiegs der Kennlinienfunktion F 54 wird ein Punkt (K, Sₖ) durchlaufen, bei dem die von dem Kupplungsausrücker bewegte Kupplungsscheibe gerade eine erste Kraftübertragung in dem Triebstrang des Fahrzeugs ermöglicht. Die Ausrückung des Ausrückkolbens zwischen 0 und L₁ wird als ein Leerhub 56 bezeichnet. Die Ausrückung zwischen L₁ und K wird als ein Verschleiß 50 bezeichnet und die Ausrückung zwischen K und L₂ wird als ein Abhub 52 bezeichnet. Die Verschleißanpassungsregelung besteht primär darin, dass das durch den Verschleiß verursachte Zusatzvolumen im Steuerraum 40, welches in Form eines größeren Weges durch den Sensor 14 gemessen wird, möglichst schnell belüftet beziehungsweise durchfahren wird. Der Aktuator, die Ventileinrichtung 34, wird also gerade in diesem Bereich mit einer großen Pulsbreite betrieben. Das heißt, die für den Druckaufbau in der Ventileinrichtung angeordneten Magnetventile werden derart pulsweitenmoduliert angesteuert, dass ihre Betätigungsdauer zu Beginn des Ausrückweges groß ist und danach bis zum Abheben des Kupplungsbelages abnimmt. Der verwendete Regelkreis schließt sich über den in dem Gehäuse 66 integrierten Wegsensor 14 welcher die angepasste Sollgröße der Kupplungsbetätigungseinrichtung 16 als Vorgabe verwendet. Bei unterschiedlichen Verschleißzuständen des als Kupplungsscheibe ausgebildeten Verschleißteils wird dadurch ein möglichst identischer Kupplungspunkt Sₖ bereitgestellt. Eine Position der Kupplungsbetätigungseinrichtung kleiner als S₁ ist nicht detektierbar oder soll nicht in eine Bewegung des Ausrückkolbens umgesetzt werden, weshalb dieser Bereich als mechanischer Leerhub 56 der Kupplungsbetätigungseinrichtung bezeichnet werden kann. Der Leerhub 56 kann wahlweise in dem Steuergerät gespeichert sein oder erhält den Wert als Parameter, zum Beispiel von der Kupplungsbetätigungseinrichtung. Daher beginnt die Kennlinienfunktion F 54 bei (L₁, S₁) und der Ausrückkolben kann zur Verringerung der Schaltzeiten am Beginn der Kennlinienfunktion verbleiben, wenn keine Vorgabe durch die Kupplungsbetätigungseinrichtung detektiert wird. Wird die Kupplungsbetätigungseinrichtung ausgehend von S₁ weiter ausgelenkt, wird der Ausrückkolben um eine entsprechende Strecke bewegt, beispielsweise bei einer Auslenkung der Kupplungsbetätigungseinrichtung um Sₖ - S₁ um K - L₁.

Mit zunehmender Anzahl vollzogener Schaltvorgänge des Kupplungsausrückers tritt ein wachsender Verschleiß der von dem Kupplungsausrücker bewegten Kupplungsscheibe auf, was normalerweise einen verschobenen Kupplungspunkt K verursachen würde, da ein Kraftschluss durch die Kupplung erst bei einer größeren Ausrückung des Ausrückkolbens erzielt wird. Weiterhin wird die Ansprechzeit der Kupplung insgesamt größer, da der Ausrückkolben eine größere Wegstrecke zum Schließen der Kupplung zurücklegen müsste. Um dies zu kompensieren, wird der Beginn der Kennlinienfunktion F 54 nach rechts zu einer aktualisierten Kennlinienfunktion F_{act} 68 verschoben, die über den Kupplungsschlupf der Kupplungsscheibe bestimmbar ist, wobei der neue Startpunkt (L₁', S₁) der aktualisierten Kennlinienfunktion F_{act} 68 durch den Verschleiß der von dem Kupplungsausrücker bewegten Kupplungsscheibe bedingt ist. Die aktualisierte Kennlinienfunktion F_{act} 68 ist gegenüber der Kennlinienfunktion F 54 um die Strecke L₁ - L₁ in positiver X-Richtung verschoben. Die Strecke, um die die aktualisierte Kennlinienfunktion F_{act} 68 gegenüber der Kennlinienfunktion F 54 verschoben ist, entspricht dabei der durch Verschleiß abgetragenen Materialstärke des Kupplungsbelags der Kupplungsscheibe. Durch das Verschieben der Kennlinienfunktion F 54 in positiver X-Richtung erhält der Fahrer des Fahrzeugs den subjektiven Eindruck eines gleich bleibenden Kupplungspunktes K, da die Kraftübertragung weiterhin bei Sₖ einsetzt. Weiterhin bleibt die Schaltzeit der Kupplung konstant. Die Anpassung der zugehörigen Position des Ausrückkolbens von dem Punkt K zu dem Punkt K' wird hingegen nicht wahrgenommen und automatisch durch die Kennlinienfunktion F erreicht. Die Kennlinienfunktion F ist aus der Position des Ausrückkolbens im Verhältnis zu der Position der Kupplungsbetätigungseinrichtung bestimmbar, wobei der Kupplungspunkt K über den CAN-Bus in Abhängigkeit von einer Motordrehzahl des Antriebsmotors, einer Drehzahl am Getriebeausgang und den Motordrehmoment durch den Kupplungsschlupf bestimmbar ist. Im einfachsten Falle ist die Motordrehzahl ungleich null und die Drehzahl am Getriebeausgang gleich Null. Dieser Zustand entspricht einer geöffneten Kupplung. Ist die Motordrehzahl gleich der Drehzahl an dem Getriebeausgang hinter der Kupplung, wobei das Übersetzungsverhältnis des Getriebes berücksichtigt werden muss, so ist die Kupplung geschlossen. Das Motordrehmoment ist bei der Berücksichtigung eines im Bereich des Kupplungspunktes K möglichen Kupplungsschlupfes von Bedeutung.

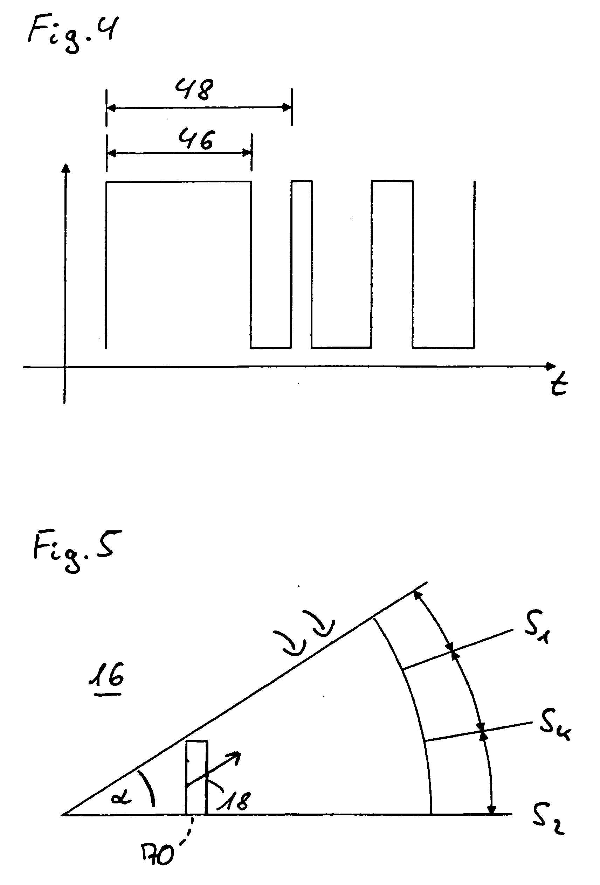

Figur 4 zeigt einen Graphen zur Veranschaulichung einer pulsweitenmodulierten Ansteuerung einer Ventileinrichtung des Kupplungsausrückers. Aufgetragen ist auf der X-Achse die Zeit und auf der Y-Achse der Treiberpuls für die angesteuerte Ventileinrichtung. Der dargestellte Treiberpuls umfasst eine Pulsbreite 46 mit einer Toleranzbreite 48 von ca. plus minus 40% Toleranzbreite. Die Pulsbreite 48 wird der Stellung der Kupplungsbetätigungseinrichtung angepasst und ist unter anderem eine Funktion einer Leerwegskorrektur, einer Verschleißwegskorrektur des bereits zurückgelegten Wegs des Ausrückkolbens und der den Ausrückkolben zurückstellenden Feder.

Figur 5 zeigt eine schematische Darstellung einer Kupplungsbetätigungseinrichtung mit verschiedenen Betätigungszuständen. Die dargestellte Kupplungsbetätigungseinrichtung 16 umfasst einen weiteren Sensor 18, der an eine elektrische Leitung 70 angeschlossen ist, zur Erfassung der Stellung der Kupplungsbetätigungseinrichtung 16. Die dargestellte Kupplungsbetätigungseinrichtung 16 ist als ein entlang einer kreissegmentförmigen Kurve betätigbares Pedal dargestellt, wobei die markierte Achse gegenüber der ortsfesten Achse um einen Winkel a verschwenkbar ist. Im vollständig betätigten Zustand detektiert der weitere Sensor 18 die Stellung S₂ der Kupplungsbetätigungseinrichtung 16. Die von dem weiteren Sensor 18 geringstmögliche detektierbare Auslenkung aus der Ruhelage der Kupplungsbetätigungseinrichtung 16 entspricht der dargestellten Position S₁. Alternativ ist auch denkbar, dass der weitere Sensor 18 alle Positionen der Kupplungsbetätigungseinrichtung zwischen der Ruhestellung und der maximalen Auslenkung S₂ detektieren kann, jedoch alle Positionen kleiner als S₁ nicht in Form einer Bewegung des Ausrückkolbens umgesetzt werden sollen. Die Ruhestellung der Kupplungsbetätigungseinrichtung 16 ist auf der der Position S₂ abgewandten Seite der Position S₁ dargestellt. Zwischen den beiden maximal detektierbaren Stellungen der Kupplungsbetätigungseinrichtung ist die Stellung Sₖ eingezeichnet, bei der die Kupplung einen ersten Kraftschluss herstellt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichentiste

- 10: Kupplungsausrücksystem
- 12: Fahrzeug
- 14: Sensor
- 16: Kupplungsbetätigungseinrichtung
- 18: weiterer Sensor
- 20: Ausrückkolben
- 22: Steuergerät
- 24: Schreib-Lesespeicher
- 26: Anschluss
- 28: Verschleißteil
- 30: Spannungsversorgung
- 32: Medienversorgungsanschluss
- 34: Ventileinrichtung
- 36: Medienabführung
- 38: Drucksensor
- 40: Steuerraum
- 42: Feder
- 44: Stecker
- 46: Pulsbreite
- 48: Toleranzbreite
- 50: Verschleiß
- 52: Abhub
- 54: Kennlinienfunktion F
- 56: Leerhub
- 58: Antriebsmotor
- 60: Getriebe
- 62: Antriebswelle
- 64: Kupplungsausrücker
- 66: Gehäuse
- 68: aktualisierte Kennlinienfunktion F_{act}
- 70: elektrische Leitung
- 72: Kupplung
- 74: Mittel zur Kraftübertragung

## Patentansprüche

1. Verfahren zum Betreiben eines Kupplungsausrücksystems (10) eines Fahrzeugs (12) mit
- einem elektrisch betätigbaren Kupplungsausrücker (64), der einen Sensor (14) zur Erfassung einer Stellung eines Ausrückkolbens (20) des Kupplungsausrückers (64) und ein Steuergerät (22), das einen Ausrückkolben (20) in Abhängigkeit von einer erfassten Stellung einer Kupplungsbetätigungseinrichtung (16) steuert, umfasst, und
- einem weiteren Sensor (18) zur Erfassung der Stellung der Kupplungsbetätigungseinrichtung (16).
- wobei eine Kennlinienfunktion F (54) von einem Start punkt (L₁S₁) bis zu einem Endpunkt (L₂S₂) anwächst, die einen Zusammenhang zwischen der Stellung der Kupplungsbetätigungseinrichtung (16) und der Stellung des Ausrückkolbens (20) beschreibt, beim Betätigen des Kupplungsausrücksystems (10) berücksichtigt wird,
- wobei beim Betätigen des Kupplungsausrücksystems (10) eine aktualisierte Kennlinienfunktion F_{act} (68) von dem Steuergerät (22) ermittelt wird, die einen aktuellen Zusammenhang zwischen der Stellung der Kupplungsbetätigungseinrichtung (16) und der Stellung des Ausrückkolbens (20) beschreibt,
- **dadurch gekennzeichnet, dass** die aktualisierte Kennlinienfunktion F_{act} (68) gegenüber der gespeicherten Kennlinienfunktion F (54) vom Startpunkt bis zum Endpunkt um eine Strecke in der Richtung der Stellung des Ansrückkolbens (20) verschoben wird, die einer durch Verschleiß abgetragenen Materialstärke eines Kupplungsbelages entspricht, wobei ein Punkt auf der kennlinie bestimmt wird, an dem gerade eine erste Kraftübertragung über eine Kupplungsscheibe einsetzt, und
- dass die gespeicherte Kennlinienfunktion F (54) nach dem Betätigen des Kupplungsausrücksystems (10) durch die aktualisierte Kennlinienfunktion F_{act} (68) ersetzt wird, um beim nächsten Betätigen des Kupplungsausrücksystems (10) über eine aktuelle Kennlinienfunktion F (54) zu verfügen.

2. Verfahren nach Anspruch 1, **dadurch gekennzeichnet, dass** die Kennlinienfunktion F (54) in einem in dem Kupplungsausrücksystem (10) angeordneten Schreib-Lesespeicher (24) gespeichert wird.

3. Verfahren nach einem der vorhergehenden Ansprüche, **dadurch gekennzeichnet, dass** über einen Anschluss (26) an einen CAN-Bus der Kupplungsschlupf beim Betätigen des Kupplungsausrücksystems (10) zur Bestimmung der aktualisierten Kennlinienfunktion F_{act} (68) berücksichtigt wird.

4. Verfahren nach einem der vorhergehenden Ansprüche, **dadurch gekennzeichnet, dass** ein Warnsignal ausgegeben wird, wenn ein in einem elektrischen Schreib-Lesespeicher (24) abgelegter zulässiger Verschleißwert von einem ermittelten Verschleißwert überschritten wird.

5. Verfahren nach einem der Ansprüche 1 bis 4, **dadurch gekennzeichnet, dass** die gespeicherte Kennlinienfunktion F (54) vor dem ersten Betätigen des Kupplungsausrücksystems (10) werkseitig in dem Schreib-Lesespeicher (24) gespeichert wird.

6. Verfahren nach einem der Ansprüche 1 bis 5, **dadurch gekennzeichnet, dass** die gespeicherte Kennlinienfunktion F (54) bei dem ersten Betätigen des Kupplungsausrücksystems (10) bestimmt wird und in dem Schreib-Lesespeicher (24) gespeichert wird.

7. Kupplungsausrücksystem (10) mit
- einem elektrisch betätigbaren Kupplungsausrücker (64), der einen Sensor (14) zur Erfassung einer Stellung eines Ausrückkolbens (20) des Kupplungsausrückers (64) und ein Steuergerät (22), das einen Ausrückkolben (20) in Abhängigkeit von einer erfassten Stellung einer Kupplungsbetätigungseinrichtung (16) steuert, umfasst, und
- einem weiteren Sensor (18) zur Erfassung einer Stellung einer Kupplungsbetätigungseinrichtung (16),
- wobei das Steuergerät (22) geeignet ist, eine Kennlinienfunktion F (54), die von einem Startpunk (L₁S₁) bis zu einem Endpunkt (L₂S₂) anwächst, und die einen Zusammenhang zwischen der Stellung der Kupplungsbetätigungseinrichtung (16) und der Stellung des Ausrückkolbens (20) beschreibt, beim Betätigen des Kupplungsausrücksystems (10) zu berücksichtigen,
- wobei das Steuergerät (22) geeignet ist, beim Betätigen des Kupplungsausrücksystems (10) eine aktualisierte Kennlinienfunktion F_{act} (68) zu ermitteln, die einen aktuellen Zusammenhang zwischen der Stellung der Kupplungsbetätigungseinrichtung (16) und der Stellung des Ausrückkolbens (20) beschreibt,
- **dadurch gekennzeichnet, dass** die aktualisierte Kennlinienfunktion F_{act} (68) gegenüber der gespeicherten Kennlinienfunktion F (54) vom Starpunkt bis zum Endpunkt um eine Strecke in der Richtung der Stellung des Ansrückkolbens (20) verschoben ist, die einer durch Verschleiß abgetragenen Materialstärke eines Kupplungsbelages entspricht, wobei ein Punkt auf der Kennlinie bestimmt wird, an dem gerade eine erste Kraftübertragung über eine Kupplungsscheibe einsetzt, und
- dass das Steuergerät (22) geeignet ist, die gespeicherte Kennlinienfunktion F (54) nach dem Betätigen des Kupplungsausrücksystems (10) durch die aktualisierte Kennlinienfunktion F_{act} (68) zu ersetzen, um beim nächsten Betätigen des Kupplungsausrücksystems (10) über eine aktuelle Kennlinienfunktion F (54) zu verfügen.

8. Kupplungsausrücksystem (10) nach Anspruch 7, **dadurch gekennzeichnet, dass** das Kupplungsausrücksystem (10) einen Anschluss (26) an einen CAN-Bus umfasst.

9. Kupplungsausrücksystem (10) nach Anspruch 7 oder 8, **dadurch gekennzeichnet, dass** das Steuergerät (22) geeignet ist, ein Warnsignal auszugeben, wenn ein in einem elektrischen Schreib-Lesespeicher (24) abgelegter zulässiger Verschleißwert einem ermittelten Verschleißwert überschreitet.

10. Kupplungsausrücksystem (10) nach einem der Ansprüche 7 bis 9, **dadurch gekennzeichnet, dass** das Steuergerät (22) geeignet ist, die Kennlinienfunktion F (54) bei dem ersten Betätigen des Kupplungsausrücksystems (10) zu bestimmen und in dem Schreib-Lesespeicher (24) zu speichern.

## Claims

1. Method of operating a clutch release system (10) of a vehicle (12), comprising
- an electrically operable clutch releasing component (64) including a sensor (14) for detecting a position of a release piston (20) of said clutch releasing component (64) and a controller (22) controlling a release piston (20) in response to a detected position of a clutch operating means (16), and
- a further sensor (18) for detecting the position of said clutch operating means (16),
- wherein a characteristics function F (54), which defines a relationship between the position of said clutch operating means (16) and the position of said release piston (20), increases from a starting point (L₁S₁) up to a terminal point (L₂S₂) and is taken into consideration when said clutch release system (10) is operated,
- and wherein, when said clutch release system (10) is operated, an updated characteristics function F_{act} (68) is determined by said controller (22), which defines a current relationship between the position of said clutch operating means (16) and the position of said release piston (20),
**characterised in**
- **that** said updated characteristics function F_{act} (68) is shifted relative to the stored characteristics function F (54) from said starting point to said terminal point by a distance in the direction towards the position of said release piston (20), which corresponds to a thickness of material removed by wear from a clutch lining, with a point on said characteristic curve being determined at which an initial force transmission via a clutch disk begins, and
- **that** after operation of said clutch release system (10), said stored characteristics function F (54) is substituted by said updated characteristics function Fact (68) so that a current characteristics function F (54) is available at the next operation of said clutch release system (10).

2. Method according to Claim 1, **characterized in that** said characteristics function F (54) is stored in a read/write memory (24) disposed in said clutch release system (10).

3. Method according to any of the preceding Claims, **characterized in that** the clutch slip is taken into consideration via a connexion (26) to a CAN bus when said clutch release system (10) is operated for determination of said updated characteristics function F_{act} (68).

4. Method according to any of the preceding Claims, **characterized in that** a warning signal is output when a determined wear value exceeds an admissible wear value stored in an electrical read/write memory (24).

5. Method according to any of the Claims 1 to 4, **characterized in that** said stored characteristics function F (54) is stored in said read/write memory (24) in the manufacturing plant prior to the first operation of said clutch release system (10).

6. Method according to any of the Claims 1 to 5, **characterized in that** said stored characteristics function F (54) is determined and stored in said read/write memory (24) by the time of first operation of said clutch release system (10).

7. Clutch release system (10) comprising
- an electrically operable clutch releasing component (64) including a sensor (14) for detecting a position of a release piston (20) of said clutch releasing component (64) and a controller (22) controlling a release piston (20) in response to a detected position of a clutch operating means (16), and
- a further sensor (18) for detecting the position of said clutch operating means (16),
- wherein said controller (22) is suitable for taking into consideration a characteristics function F (54), which increases from a starting point (L₁S₁) up to a terminal point (L₂S₂) and which defines a relationship between the position of said clutch operating means (16) and the position of said release piston (20), when said clutch release system (10) is operated,
- and wherein said controller (22) is suitable for determining an updated characteristics function F_{act} (68) when said clutch release system (10) is operated, which defines a current relationship between the position of said clutch operating means (16) and the position of said release piston (20),
**characterised in**
- **that** said updated characteristics function F_{act} (68) is shifted relative to the stored characteristics function F (54) from said starting point to said terminal point by a distance in the direction towards the position of said release piston (20), which corresponds to a thickness of material removed by wear from a clutch lining, with a point on said characteristic curve being determined at which an initial force transmission via a clutch disk begins, and
- **that** said controller (22) is suitable for substituting said updated characteristics function F_{act} (68) for said stored characteristics function F (54) after operation of said clutch release system(10), so that a current characteristics function F (54) is available at the next operation of said clutch release system (10).

8. Clutch release system (10) according to Claim 7, **characterized in that** said clutch release system (10) comprises a connexion (26) to a CAN bus.

9. Clutch release system (10) according to Claim 7 or 8, **characterized in that** said controller (10) is suitable for the output of a warning signal when an admissible wear value, which is stored in an electrical read/write memory (24), exceeds a determined wear value.

10. Clutch release system (10) according to any of the Claims 7 to 9, **characterized in that** said controller (22) is suitable for determining said characteristics function F (54) and storing it in a read/write memory (24) by the time of first operation of said clutch release system (10).

## Revendications

1. Procédé de faire fonctionner un système de débrayage (10) d'un véhicule, comprenant
- un composant de débrayage à fonctionnement électrique (64) renfermant un détecteur (14) à détecter une position d'un piston de débrayage (20) dudit composant de débrayage (64) et un bloc contrôleur (22) à commander un piston de débrayage (20) en réponse à une position détectée d'un moyen actionneur d'embrayage (16), et
- un détecteur complémentaire (18) à détecter la position dudit moyen actionneur d'embrayage (16),
- dans lequel une fonction de caractéristique F (54), qui définit une relation entre la position dudit moyen actionneur d'embrayage (16) et la position dudit piston de débrayage (20), s'augmente à partir d'un point de départ (L₁S₁) jusqu'à un point de terminaison (L₂S₂), en étant prise en considération, quand le système de débrayage (10) est commandé,
- et dans lequel, quand ledit système de débrayage (10) est commandé, une fonction de caractéristique mise à jour F_{act} (68) est établie par ledit bloc contrôleur (22), qui définit une relation actualisée entre la position dudit moyen actionneur d'embrayage (16) et la position of dudit piston de débrayage (20),
**caractérisé en ce**
- **que** ladite fonction de caractéristique mise à jour F_{act} (68) est décalée relativement à la fonction de caractéristique mise en mémoire F (54) à partir dudit point de départ jusqu'audit point de terminaison par une distance en un sens vers la position dudit piston de débrayage (20), qui correspond à une épaisseur de matériau enlevée par usure d'une garniture d'embrayage, à un point sur ladite courbe caractéristique étant déterminé, auquel une transmission d'effort initiale via un disque d'embrayage commence, et
- **qu'**après la mise en marche dudit système de débrayage (10), ladite fonction de caractéristique mise en mémoire F (54) est remplacée par ladite fonction de caractéristique mise à jour F_{act} (68) d'une telle façon, qu'une fonction de caractéristique actualisée F (54) soit disponible au temps de commande suivante dudit système de débrayage (10).

2. Procédé selon la revendication 1, **caractérisé en ce que** ladite fonction de caractéristique F (54) est mise en mémoire dans une mémoire d'écriture-lecture (24) disposée dans ledit système de débrayage (10).

3. Procédé selon une quelconque des revendications précédentes, **caractérisé en ce que** le glissement d'embrayage est pris en considération via un connecteur (26) de raccord à un bus du type CAN, quand ledit système de débrayage (10) est commandé pour la détermination de ladite fonction de caractéristique mise à jour F_{act} (68).

4. Procédé selon une quelconque des revendications précédentes, **caractérisé en ce qu'**un signal avertisseur est émis, quand une valeur d'usure déterminée dépasse une valeur d'usure permissible, qui est mise en mémoire dans une mémoire électrique d'écriture-lecture (24).

5. Procédé selon une quelconque des revendications 1 à 4, **caractérisé en ce que** ladite fonction de caractéristique mise en mémoire F (54) est enregistrée dans ladite mémoire d'écriture-lecture (24) dans l'usine avant la première mise en service dudit système de débrayage (10).

6. Procédé selon une quelconque des revendications 1 à 5, **caractérisé en ce que** ladite fonction de caractéristique mise en mémoire F (54) est déterminé et enregistrée dans ladite mémoire d'écriture-lecture (24) au temps de la première mise en service dudit système de débrayage (10).

7. Système de débrayage (10) comprenant
- un composant de débrayage à fonctionnement électrique (64) renfermant un détecteur (14) à détecter une position d'un piston de débrayage (20) dudit composant de débrayage (64) et un bloc contrôleur (22) à commander un piston de débrayage (20) en réponse à une position d'un moyen actionneur d'embrayage (16), et
- un détecteur complémentaire (18) à détecter la position dudit moyen actionneur d'embrayage (16),
- dans lequel ledit bloc contrôleur (22) se prête à prendre en considération une fonction de caractéristique F (54), qui s'augmente à partir d'un point de départ (L₁S₁) jusqu'à un point de terminaison (L₂S₂) et qui définit une relation entre la position dudit moyen actionneur d'embrayage (16) et la position dudit piston de débrayage (20), quand ledit système de débrayage (10) est commandé,
- et dans lequel ledit bloc contrôleur (22) se prête à la détermination d'une fonction de caractéristique mise à jour F_{act} (68), quand ledit système de débrayage (10) est commandé, qui définit une relation actualisée entre la position dudit moyen actionneur d'embrayage (16) et la position dudit piston de débrayage (20),
**caractérisé en ce**
- **que** ladite fonction de caractéristique mise à jour F_{act} (68) est décalée relativement à la fonction de caractéristique mise en mémoire F (54) à partir dudit point de départ vers ledit point de terminaison par une distance en le sens vers la position dudit piston de débrayage (20), qui correspond à une épaisseur de matériau enlevée par usure d'une garniture d'embrayage, à un point sur ladite courbe caractéristique étant déterminé, auquel une transmission d'effort initiale via un disque d'embrayage commence, et
- **que** ledit bloc contrôleur (22) se prête à remplacer ladite fonction de caractéristique mise en mémoire F (54) par ladite fonction de caractéristique mise à jour F_{act} (68) après le service dudit système de débrayage(10), d'une telle façon, qu'une fonction de caractéristique actualisée F (54) soit disponible au temps de commande suivant dudit système de débrayage (10).

8. Système de débrayage (10) selon la revendication 7, **caractérisé en ce que** ledit système de débrayage (10) comprend un connecteur (26) de raccord à un bus du type CAN.

9. Système de débrayage (10) selon la revendication 7 ou 8, **caractérisé en ce que** ledit bloc contrôleur (10) se prête à la sortie d'un signal avertisseur, quand une valeur d'usure permissible, qui est enregistrée dans une mémoire électrique d'écriture-lecture (24), dépasse une valeur d'usure déterminée.

10. Système de débrayage (10) selon une quelconque des revendications 7 à 9, **caractérisé en ce que** ledit bloc contrôleur (22) se prête à la détermination de ladite fonction de caractéristique F (54) et son enregistrement dans une mémoire d'écriture-lecture (24) au temps de la première mise en service dudit système de débrayage (10).
